# EUROPEAN PATENT APPLICATION

(11) **EP 4 682 715 A1**
(43) Date of publication of application: **21.01.2026**
(21) Application number: 23944906.9
(22) Date of filing: 17.11.2023
(51) Int. Cl.: G06F 9/48

(54) **TASK SCHEDULING METHOD, ELECTRONIC DEVICE, STORAGE MEDIUM, AND CHIP**

(30) Priority: 12.07.2023 CN 202310858604
(71) Applicant: Honor Device Co., Ltd., Shenzhen, Guangdong 518040 (CN)
(72) Inventor: HUANG, Tonghuan, Shenzhen, Guangdong 518040 (CN); GUO, Daoxin, Shenzhen, Guangdong 518040 (CN)
(74) Representative: Isarpatent
(86) International application number: PCT/CN2023/132263
(87) International publication number: WO 2025/010900

(57) **Abstract**

This application provides a task scheduling method, an electronic device, a storage medium, and a chip, and relates to the field of terminal technologies. The method includes: acquiring a plurality of graphics processing unit (GPU) tasks, and sorting the plurality of GPU tasks in descending order of priorities of GPU task types; allocating resources to the plurality of GPU tasks in a plurality of ring buffers, so that resource proportions of GPU tasks sorted higher are higher at positions closer to heads of the plurality of ring buffers; and sequentially executing the plurality of GPU tasks. By using the method, in a scenario with heavy GPU load, freezing of a currently displayed picture of an electronic device can be reduced, thereby improving the user experience. This solution requires no GPU frequency increase, so that no GPU power consumption increase is caused.

## Description

This application claims priority to Chinese Patent Application No. 2023108586049, filed with the China National Intellectual Property Administration on July 12, 2023, and entitled "TASK SCHEDULING METHOD, ELECTRONIC DEVICE, STORAGE MEDIUM, AND CHIP", which is incorporated herein by reference in its entirety.

### TECHNICAL FIELD

This application relates to the field of terminal technologies, and in particular, to a task scheduling method, an electronic device, a storage medium, and a chip.

### BACKGROUND

With the development of technologies, refresh rates of display screens of electronic devices such as mobile phones and tablet computers are increasing. The refresh rate is the quantity of frames of images drawn on a screen of an electronic device per second. Currently, refresh rates of electronic devices have gradually evolved from 30 frames and 60 frames to 90 frames and 120 frames.

As the refresh rate increases, the load on a graphics processing unit (graphics processing unit, GPU) of an electronic device increases day by day. When there are a relatively large quantity of GPU tasks, the GPU will queue the GPU tasks and process the GPU tasks in sequence. In a scenario with heavy GPU load, during queuing of GPU tasks for execution, the GPU tasks are queued in a first-created-first-executed order for execution. In this case, the GPU task created first will block the GPU task created later due to its relatively long execution time. When the GPU task created later is a task related to the currently displayed picture of the electronic device, problems of freezing and frame dropping may be caused to the currently displayed picture of the electronic device, affecting the user experience.

### SUMMARY

In view of this, this application provides a task scheduling method, an electronic device, a storage medium, and a chip, which can reduce freezing of a currently displayed picture of an electronic device in a scenario with heavy GPU load, thereby improving the user experience.

According to a first aspect, this application provides a task scheduling method. The method includes: acquiring a plurality of graphics processing unit (GPU) tasks, and sorting the plurality of GPU tasks in descending order of priorities of GPU task types; allocating resources to the plurality of GPU tasks in a plurality of ring buffers, so that resource proportions of GPU tasks sorted higher are higher at positions closer to heads of the plurality of ring buffers; and sequentially executing the plurality of GPU tasks.

By using this solution, resources of the ring buffers are no longer allocated to GPU tasks directly in the order in which the GPU tasks are generated. Instead, the GPU tasks are first sorted according to the priorities of the GPU task types corresponding to the GPU tasks, and the GPU tasks preempts the resources of the ring buffers in the order after sorting. In this case, resource proportions of GPU tasks with higher priorities are higher at positions of the heads of the ring buffers, so that GPU tasks with higher priorities can start to be executed earlier and the execution can be completed earlier, while GPU tasks with lower priorities will be executed later. In this case, even if the GPU tasks with lower priorities require a relatively long time for execution, they will not block the GPU tasks with higher priorities. The task related to a displayed picture of a foreground interface of the electronic device is a GPU composition task with a higher priority, which can be executed first. Therefore, this solution can reduce freezing of the currently displayed picture of the electronic device in a scenario with heavy GPU load, thereby improving the user experience. In addition, this solution adjusts the execution order of GPU tasks by resource preemption, and requires no GPU frequency increase, so that no GPU power consumption increase is caused, and the solution is highly practical.

In a possible implementation, the acquiring a plurality of GPU tasks, and sorting the plurality of GPU tasks in descending order of priorities of GPU task types specifically includes: acquiring GPU task instructions generated by processes, where each of the GPU task instructions corresponds to one GPU task; determining GPU tasks corresponding to the GPU task instructions, and determining GPU task types corresponding to the GPU tasks; and sorting the GPU tasks in descending order of priorities of the GPU task types.

The resource preemption of GPU tasks occurs at a kernel layer of a system, specifically in a kernel graphics system layer (Kernel Graphics System Layer, KGSL). In the method of this application, a pending task scheduling module is added to the KGSL, and in this module, GPU tasks are re-sorted according to the priorities of the GPU task types.

In a possible implementation, when the priorities of the GPU task types corresponding to at least two GPU tasks are the same, the sorting the GPU tasks in descending order of priorities of the GPU task types specifically includes: acquiring task generation times corresponding to the at least two GPU tasks; and sorting the at least two GPU tasks in chronological order of the task generation times.

In a possible implementation, the GPU tasks include at least the following two GPU tasks: a first GPU task and a second GPU task, where the first GPU task is sorted higher than the second GPU task, and the allocating resources to the plurality of GPU tasks in a plurality of ring buffers specifically includes:
making a quantity of ring buffers occupied by the first GPU task at a first position greater than or equal to a quantity of ring buffers occupied by the second GPU task at the first position; and
a position occupied by the first GPU task farthest from the heads of the ring buffers is a second position, a position occupied by the second GPU task farthest from the heads of the ring buffers is a third position, and the second position is closer to the heads of the ring buffers than the third position.

In this case, the first GPU task with a higher priority can be executed earlier and the execution can be completed earlier.

In a possible implementation, the making a quantity of ring buffers occupied by the first GPU task at a first position greater than or equal to a quantity of ring buffers occupied by the second GPU task at the first position specifically includes:
making the first GPU task occupy all ring buffers at the first position.

In this case, the first GPU task with the higher priority preempts most resources and can be executed first, ensuring that the first GPU task is completed quickly.

In a possible implementation, the GPU tasks further include a third GPU task and a fourth GPU task, the third GPU task is sorted higher than the fourth GPU task, the fourth GPU task is a GPU task sorted lowest in the GPU tasks, and the allocating resources to the plurality of GPU tasks in a plurality of ring buffers specifically includes:
when the fourth GPU task exactly completes occupation of all required ring buffers after remaining ring buffers at the fourth position are occupied by the fourth GPU task, setting the remaining ring buffers at the fourth position to a dormant state; and
making the fourth GPU task occupy ring buffers at a fifth position, where the fourth position is closer to the heads of the ring buffers than the fifth position.

By setting the remaining ring buffers at the fourth position to a dormant state, power consumption can be reduced.

In a possible implementation, the GPU task type is any one of the following: a GPU composition task, a GPU rendering task, or a GPU algorithm task; and a priority order of the GPU task types is: a priority of the GPU composition task is higher than that of the GPU rendering task, and the priority of the GPU rendering task is higher than that of the GPU algorithm task.

In a possible implementation, the GPU algorithm task is generated by the following processes of applications:
a camera shooting process, a navigation process of a map application, or an image recognition process of image recognition software.

The solution of this application can be used to alleviate the problem of freezing of a foreground displayed picture caused by a GPU algorithm task generated by the camera shooting process, a GPU algorithm task generated by the navigation process of the map application, and a GPU rendering task generated by a video editing application, and has relatively high usability.

According to a second aspect, this application provides an electronic device, where the electronic device includes a memory and a processor, the memory stores a computer program, and the processor is configured to invoke and execute the computer program, to implement the task scheduling method according to the first aspect and any implementation of the first aspect.

According to a third aspect, this application further provides a computer-readable storage medium, where the computer-readable storage medium stores a computer program, and when the computer program is executed by an electronic device, the task scheduling method provided in any one of the foregoing implementations is implemented.

According to a fourth aspect, this application further provides a chip. The chip includes a processor, and the processor is configured to invoke a computer program in a memory to perform the task scheduling method provided in any one of the foregoing implementations.

### BRIEF DESCRIPTION OF DRAWINGS

FIG. 1 is a schematic diagram 1 of a principle according to this application;
FIG. 2A, FIG. 2B, and FIG. 2C are a schematic diagram 1 of a scenario according to this application;
FIG. 3A, FIG. 3B, and FIG. 3C are a schematic diagram 2 of a scenario according to this application;
FIG. 4 is a schematic architectural diagram of an electronic device according to an embodiment of this application;
FIG. 5 is a time sequence diagram of GPU drawing according to this application;
FIG. 6 is a flowchart of a task scheduling method according to an embodiment of this application;
FIG. 7 is a schematic diagram 1 of a principle according to an embodiment of this application;
FIG. 8 is a schematic diagram 2 of a principle according to an embodiment of this application;
FIG. 9 is an execution log of GPU tasks after adoption of this solution according to an embodiment of this application;
FIG. 10 is a flowchart of another task scheduling method according to an embodiment of this application;
FIG. 11 is a schematic diagram 3 of a principle according to an embodiment of this application;
FIG. 12 is a schematic diagram 4 of a principle according to an embodiment of this application; and
FIG. 13 is a schematic diagram of an electronic device according to an embodiment of this application.

### DESCRIPTION OF EMBODIMENTS

In the specification, claims, and accompanying drawings of this application, the terms "first", "second", "third", and the like are intended to distinguish different objects but do not indicate a particular order.

To enable a person skilled in the art to understand the solution of this application more clearly, an application scenario of the technical solution of this application is described below first.

In current technologies, when there are a relatively large quantity of GPU tasks, a GPU will queue the GPU tasks and process the GPU tasks in sequence. In a scenario with heavy GPU load, during queuing of GPU tasks for execution, the GPU tasks are queued in a first-created-first-executed order for execution.

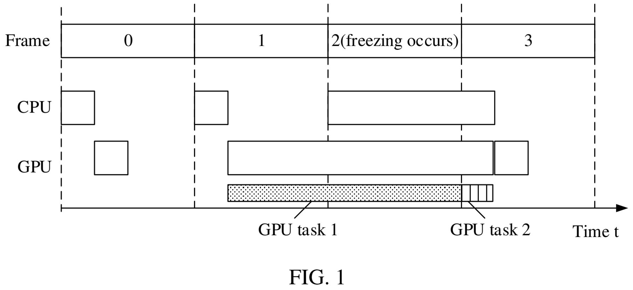

FIG. 1 is a schematic diagram 1 of a principle according to this application.

A central processing unit (CPU) of an electronic device sends a drawing instruction to a GPU, and the GPU processes a task corresponding to the drawing instruction.

In this case, freezing occurs in the second frame. The cause of the freezing is that a task related to the foreground displayed picture is a GPU task 2, but because a GPU task 1 is executed first and a processing time of the GPU task 1 is long, the GPU task 2 is blocked and is not completed within one frame, causing freezing to the frame.

A description is provided below by using examples with reference to specific scenarios.

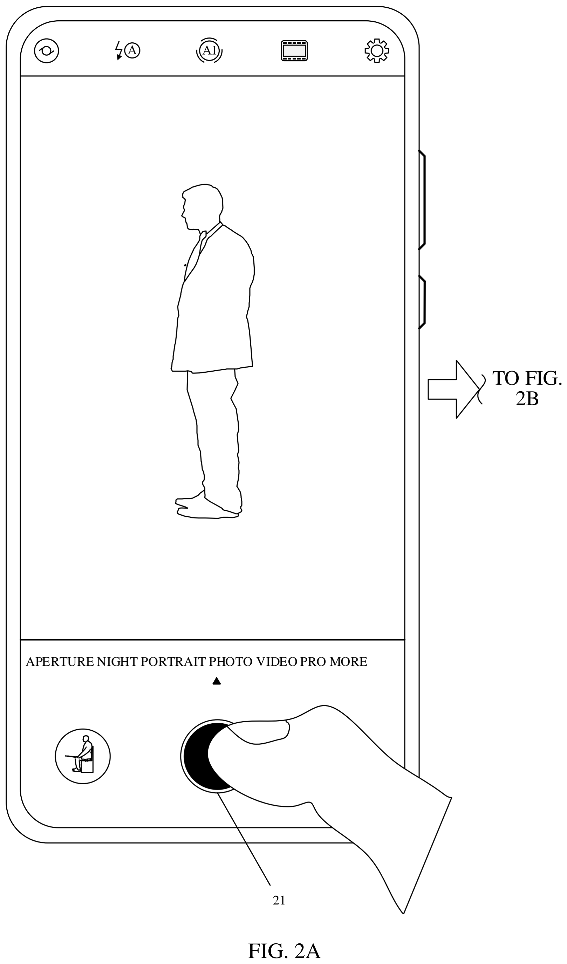

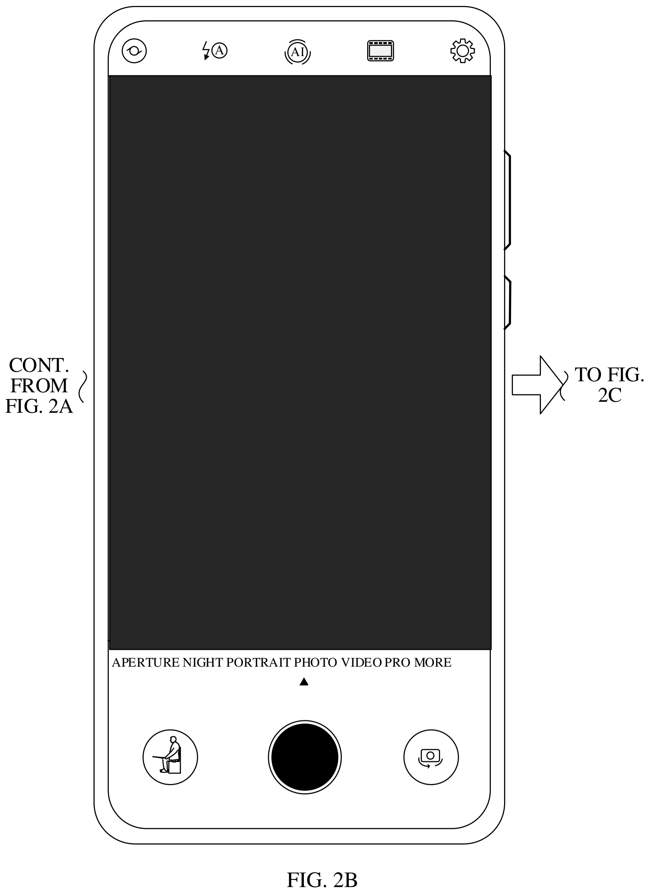

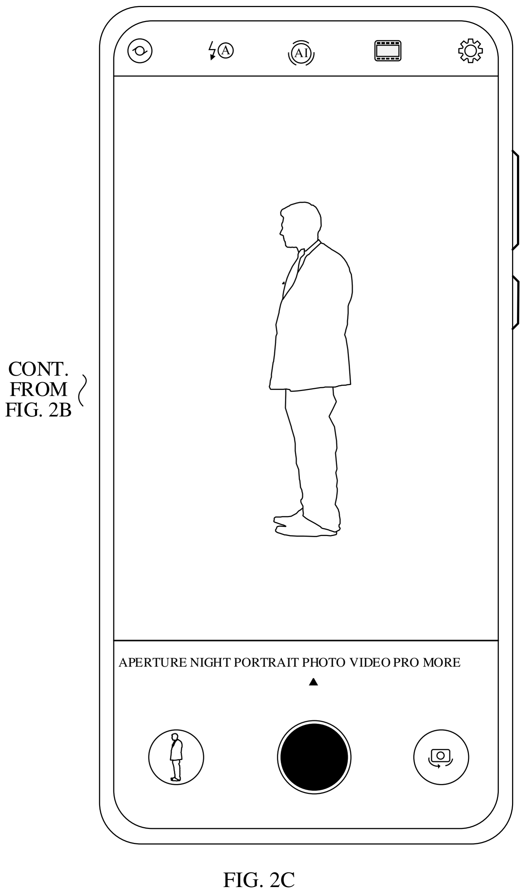

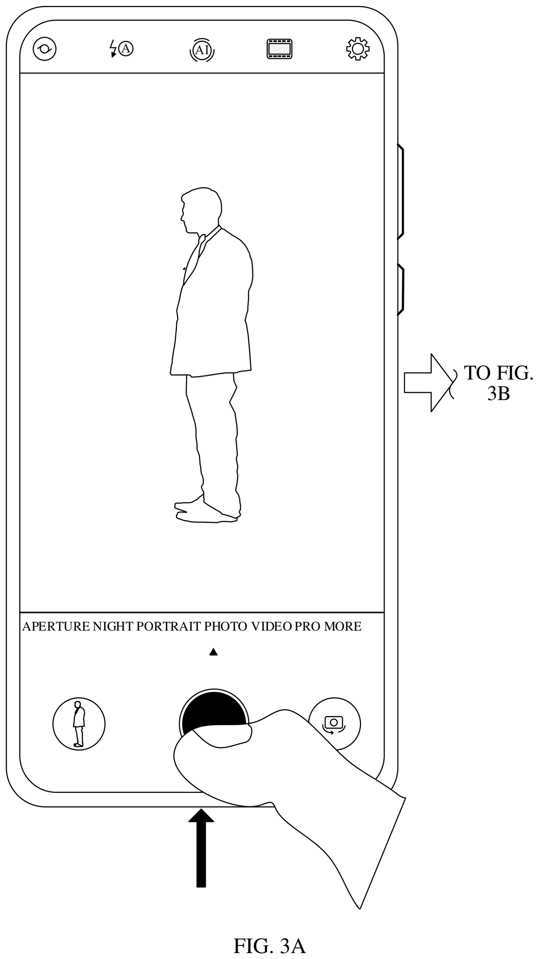

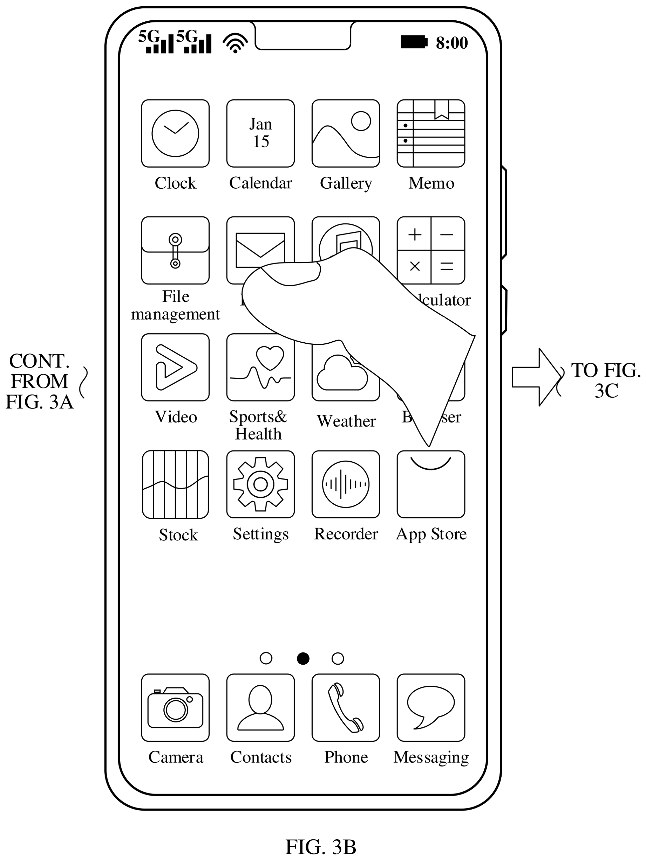

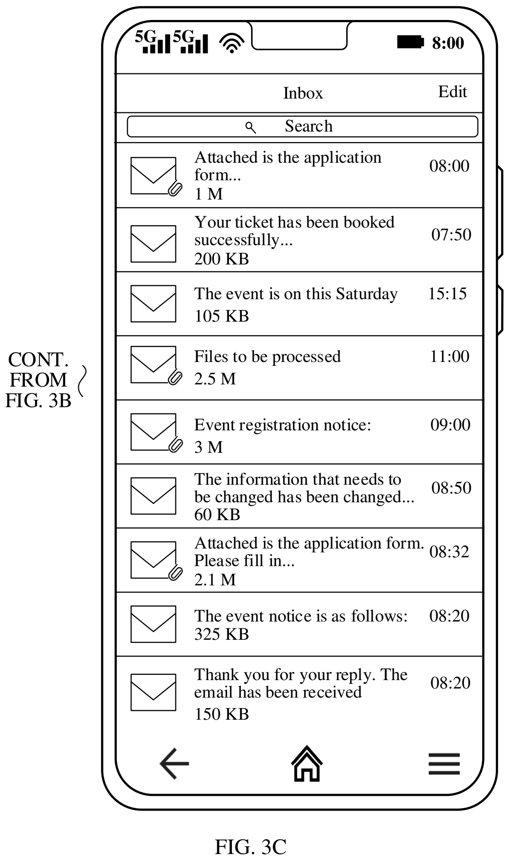

Refer to FIG. 2A, FIG. 2B, FIG. 2C, FIG. 3A, FIG. 3B, and FIG. 3C together. FIG. 2A, FIG. 2B, and FIG. 2C are a schematic diagram 1 of a scenario according to this application. FIG. 3A, FIG. 3B, and FIG. 3C are a schematic diagram 3 of a scenario according to an embodiment of this application.

FIG. 2A is a schematic diagram of a preview interface of the electronic device for photographing. When a user clicks a photographing button 21, the photographing interface shown in FIG. 2B flashes briefly and generates a photo, and then returns to a preview interface shown in FIG. 2C.

After the user uses a camera to take a plurality of consecutive photos, the user implements an animation effect shown in FIG. 3A, FIG. 3B, and FIG. 3C by sliding. Specifically, the user slides up on a photographing interface shown in FIG. 3A to return to a desktop, and slides on the desktop to switch desktop pages, for example, from a home page of the desktop to a second page shown in FIG. 3B, clicks on the second page shown in FIG. 3B to start an email APP, and opens an email interface shown in FIG. 3C.

In this case, freezing and frame dropping may occur in the animation effect of application starting or desktop sliding. It may be understood that, the foregoing animation effect triggering scenarios are only for distance description. In actual applications, the animation effect triggering scenarios on the desktop include, but not limited to, scenarios requiring the GPU for rendering processing such as pulling down a status bar, pulling up the status bar, side sliding, application shifting, opening animations of a desktop editing mode, opening desktop folders, closing desktop folders, creating and merging folders, releasing folders, swapping desktop application positions, click effects, long press effects, animations corresponding to application installation prompts, or entering one-handed operation mode, and details are not described herein again.

By analyzing GPU tasks during triggering of animation effects after a camera continuous shooting scenario, it is found that a camera algorithm occupies GPU resources first, resulting in that the GPU cannot complete a GPU task corresponding to the currently displayed picture within the duration of one frame, thereby causing freezing. An example in which a screen refresh rate of the electronic device is 60 frames per second is used, then a GPU rendering task of each frame of picture needs to be completed within 16.7 milliseconds. However, with reference to a camera continuous shooting log, it can be found that because a camera algorithm task occupies the GPU resources first, a GPU task of executing an animation effect needs to wait until the camera algorithm task is completed before it can be executed, and the waiting time may be as long as tens of milliseconds, which has exceeded the rendering time of 16.7 milliseconds of one frame of picture, causing frame dropping and freezing to the animation effect of the foreground interface.

In the foregoing description, only the camera algorithm occupying GPU resources is used as an example. In actual applications, other types of applications may also occupy GPU resources, causing freezing and frame dropping to the foreground picture. For example, a navigation algorithm of a map application occupies GPU resources, causing freezing and frame dropping to the foreground picture. In another example, after a user adds special effects to or edits a video through a video editing application or plug-in, when another window or interface is called up during a video rendering process, the foreground picture freezes because the GPU is executing a rendering task.

Based on the above, in the current GPU resource allocation manner, GPU resources will be limitedly allocated to a GPU task created first. However, the GPU task first created may block a GPU task later created due to its relatively long execution time. When the GPU task later created is a task related to the currently displayed picture of the electronic device, problems of freezing and frame dropping may be caused to the currently displayed picture of the electronic device, affecting the user experience.

To resolve the foregoing technical problem, embodiments of this application provide a task scheduling method, an electronic device, a storage medium, and a chip. In the method, first, graphics processing unit GPU tasks are sorted in descending order of priorities of corresponding GPU task types, and then the GPU tasks are made to preempt resources of ring buffers in an order after sorting, so that resource proportions of GPU tasks sorted higher are higher at positions closer to heads of the ring buffers. The GPU tasks at positions closer to the heads in the ring buffers are executed first. By using this solution, in a scenario with heavy GPU load, freezing of a currently displayed picture of an electronic device can be reduced, thereby improving the user experience. The solution of this application can be used to alleviate the problem of freezing of a foreground displayed picture caused by a GPU algorithm task generated by the camera shooting process, a GPU algorithm task generated by the navigation process of the map application, and a GPU rendering task generated by a video editing application, and has relatively high usability. In addition, this solution requires no GPU frequency increase, so that no GPU power consumption increase is caused.

The terms "first" and "second" mentioned below are used merely for the purpose of description, and shall not be construed as indicating or implying relative importance or implying a quantity of indicated technical features. In view of this, a feature defined by "first" or "second" may explicitly or implicitly include one or more features. In the description of the embodiments, unless otherwise stated, "a plurality of" means two or more.

The electronic device in the embodiments of this application may be an electronic device such as a mobile phone, a tablet computer, a personal digital assistant (personal digital assistant, PDA), or an in-vehicle terminal device. A specific form of the electronic device is not specially limited in the embodiments of this application. In the following descriptions, that the electronic device is a mobile phone is used as an example.

To enable a person skilled in the art to understand the technical solution of this application more clearly, a drawing process of a GPU of an electronic device is described below first.

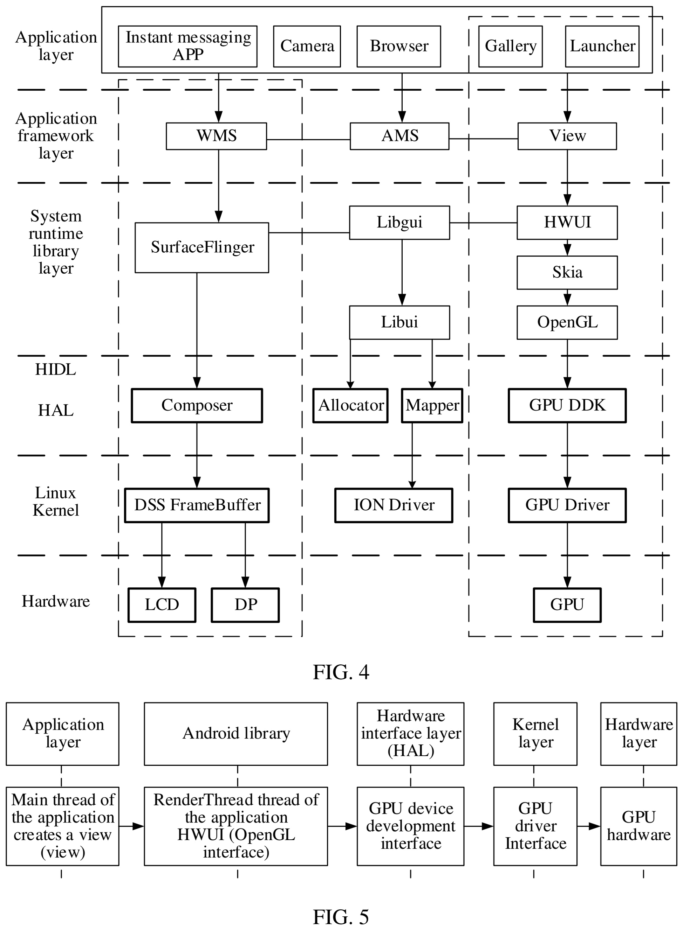

FIG. 4 is a schematic architectural diagram of an electronic device according to an embodiment of this application.

In this embodiment of this application, an Android system with the layered architecture is used as an example to describe a software structure of the electronic device.

In the layered architecture, the software is divided into several layers, and each layer has a clear role and task. The layers communicate with each other by using a software interface. In some embodiments, the Android system includes an application layer, an application framework layer (Framework), a system runtime library layer, a hardware abstraction layer (Hardware Abstraction Layer, HAL), and a kernel layer (Linux Kernel) from top to bottom. For the convenience of explanation, FIG. 4 further illustrates some devices of the hardware layer.

The application layer may include a series of application packages. Both system-built-in applications and non-system-level applications belong to the application layer and are responsible for direct interaction with users. For example, applications such as an instant messaging APP, a camera (camera), a browser (browser), a gallery (Gallery), and a launcher (Launcher) may be included.

The application framework layer provides an application programming interface (application programming interface, API) and a programming framework for applications at the application layer. The application framework layer includes some predefined functions. This layer is generally written in Java code and may be referred to as Java Framework.

The application framework layer may include, but not limited to, the following services and components.

Window manager service (Window Manager Service, WMS): It is mainly responsible for managing a window view on the Android device, and controlling an application interface and correct display and input. The WMS is responsible for managing positions, sizes, and layouts of application windows, starting, adding, and deleting windows, and handling multitasking and switching between applications, thereby ensuring a stable, smooth, and consistent user interface. The window manager may further acquire a size of a display screen, determine whether there is a status bar, lock a screen, capture a screen, and the like.

Activity manager service (Activity Manager Service, AMS): It is a key component in the Android system, responsible for managing application life cycles, task stacks, and interaction between applications, and is responsible for works such as starting, switching, and scheduling of four major components in the system, and management and scheduling of application processes.

View system (View): It includes visual controls such as a control for text display and a control for picture display. The view system may be configured to construct an application. A display interface may include one or more views. For example, a display interface including an SMS notification icon may include a view for displaying text and a view for displaying a picture. View is an abstraction of controls on an interface layer and the basis of all controls in Android, which can sense events such as pressing and sliding.

The system runtime library layer mainly includes an Android runtime library and a program library (Native C/C++ Libraries).

The Native C/C++ Libraries may include a plurality of functional modules, such as a surface manager (surface manager), a media library (media libraries), a three-dimensional graphics processing library (for example, OpenGL ES), and a 2D graphics engine (for example, SGL).

The Android runtime library includes a core library and Android runtime (Android Runtime, ART). ART is responsible for the scheduling and management of the Android system and is a running environment on the Android operating system. In the ART environment, when an application is installed for the first time, the bytecode is pre-compiled into machine code, so that the application becomes a truly native application.

The core library includes two parts: one part is a performance function that the Java language needs to invoke, and the other part is a core library of Android.

HWUI (Hardware Accelerated Drawing UI) is mainly a module added by Android for 2D hardware drawing. Before the HWUI, Android mainly used skia for software drawing. Later, due to problems such as drawing performance, Android's drawing now almost all uses hwui hardware accelerated drawing. HWUI mainly uses OpenGL for GPU hardware drawing, thereby improving the drawing performance of the entire system.

libgui is a GUI library, configured to create graphical user interfaces.

libui is a native framework of an Android graphics library, responsible for providing a framework of a graphical interface (Surface).

A role of the SurfaceFlinger is to accept graphical display data from a plurality of sources, composite the data, and then send the composited data to a display device.

The hardware abstraction layer (Hardware Abstraction Layer, HAL) is a routine program package of the software layer, is an interface layer between an operating system kernel and a hardware circuit, and is used to abstract hardware, and simulate details of a specific system platform, so that the program can directly access hardware resources.

HAL interface definition language (HAL Interface Definition Language, HIDL) is an interface definition language that specifies an interface between a HAL and its users. The HIDL allows specifying types and method invocation (which are aggregated into the interface and the software package).

Composer is a hardware compositor that accepts composited layer parameters sent from the SurfaceFlinger for compositing.

An allocator class is defined in the header file memory to help separate internal memory allocation from object construction.

Mapper is a mapping mechanism from logical devices to physical devices. Under this mechanism, users can conveniently manage storage resources according to their needs.

A GPU device development kit (Device Development Kit, DDK) includes a device driver, which enables access to GPU hardware.

The kernel (Linux Kernel) layer is a layer between hardware and software.

A display subsystem frame buffer (display subsystem FrameBuffer, DSS FrameBuffer) is configured to implement a display driver of an LCD and output DP interface data.

A dashed line box on the right side of FIG. 4 illustrates a GPU drawing process. FIG. 5 is a time sequence diagram of GPU drawing according to this application.

In the GPU drawing process, a main thread of an upper-level application, such as the gallery (Gallery) or the launcher (Launcher), creates a view, and an interface of the OpenGL of the HWUI is invoked through a RenderThread thread of the application.

The RenderThread thread is a new system-controlled processing thread, which can keep animations smooth when a UI thread is blocked.

Then the GPU DDK interface is invoked, and then the GPU Driver is invoked through the GPU DDK to finally translate instructions into various register operations that can be recognized by the GPU hardware, driving the GPU hardware to complete tasks.

An embodiment of this application provides a method for determining an execution order of GPU tasks. Through a GPU resource preemption policy, different GPU tasks preempt different resources. GPU resource preemption occurs at the kernel layer, which is described below with reference to the accompanying drawings.

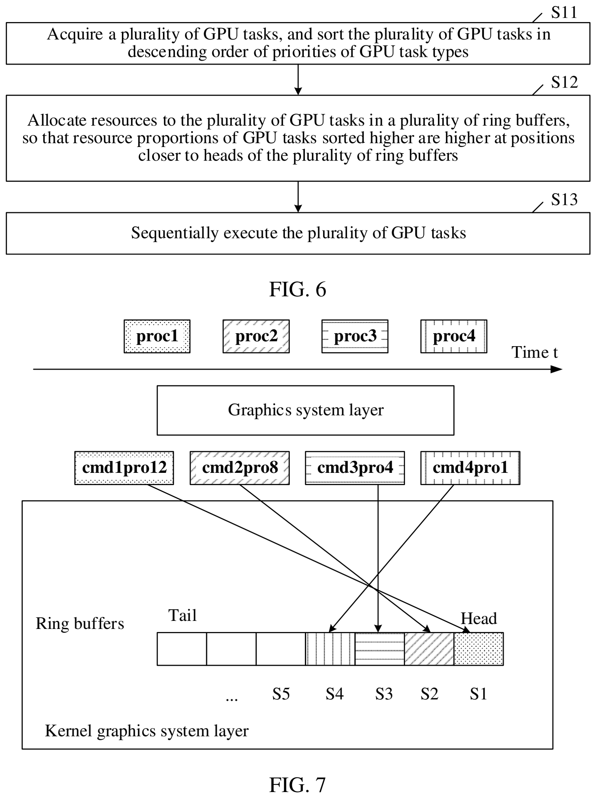

FIG. 6 is a flowchart of a method for determining an execution order of GPU tasks according to an embodiment of this application.

The method includes the following steps:
S11: Acquire a plurality of GPU tasks, and sort the plurality of GPU tasks in descending order of priorities of GPU task types.
S12: Allocate resources to the plurality of GPU tasks in a plurality of ring buffers, so that resource proportions of GPU tasks sorted higher are higher at positions closer to heads of the plurality of ring buffers.
   The GPU tasks at positions closer to the heads in the ring buffers are executed first.
S13: Sequentially execute the plurality of GPU tasks.

By preempting resources, the resource proportions of the GPU tasks sorted higher are higher at positions closer to the heads of the ring buffers. The principle of this solution is described in detail below. In the following description, an execution order of four GPU tasks is determined. In actual applications, there may be more or less GPU tasks that exist simultaneously, and this is not specifically limited in the embodiments of this application.

FIG. 7 is a schematic diagram 1 of a principle according to an embodiment of this application.

In a current solution without ring buffer preemption, GPU tasks issued by different processes such as proc1, proc2, proc3, and proc4 pass through a graphics system layer (Graphics System Layer, GSL) to generate corresponding GPU task instructions. The GPU task instruction corresponding to proc1 is cmd1pro12, the GPU task instruction corresponding to proc2 is cmd2pro8, the GPU task instruction corresponding to proc3 is cmd3pro4, and the GPU task instruction corresponding to proc4 is cmd4pro1.

cmd1pro12 indicates a GPU task with a priority of 12, cmd2pro8 indicates a GPU task with a priority of 8, cmd3pro14 indicates a GPU task with a priority of 4, and cmd4pro1 indicates a GPU task with a priority of 1. For ease of description, in the embodiments of this application, when the priority is n, a smaller n indicates a higher priority, and this does not constitute a limitation on the technical solution of this application.

These GPU task instructions occupy the resources of the ring buffers (ring buffer) in a kernel graphics system layer (Kernel Graphics System Layer, KGSL) in an order in which processes issue the GPU tasks. In this case, the GPU task corresponding to cmd1pro12 generated first occupies a head position S1, then the GPU task corresponding to cmd2pro8 occupies a position S2, the GPU task corresponding to cmd3pro4 occupies a position S3, and the GPU task corresponding to cmd4pro1 occupies a position S4 closest to the tail.

In the ring buffer, because a GPU task closer to the head position is executed first, the GPU task corresponding to cmd1pro12 is always executed first, and the GPU task corresponding to cmd4pro1 is always executed later. This will result in that cmd4pro1 will be affected if there is a task with a long execution time in the GPU tasks such as cmd1pro12, cmd2pro8, or cmd3pro4. If the GPU task corresponding to cmd4pro1 is a GPU task related to the foreground displayed picture, that is, a GPU composition task with a relatively high priority, freezing will be caused to the foreground.

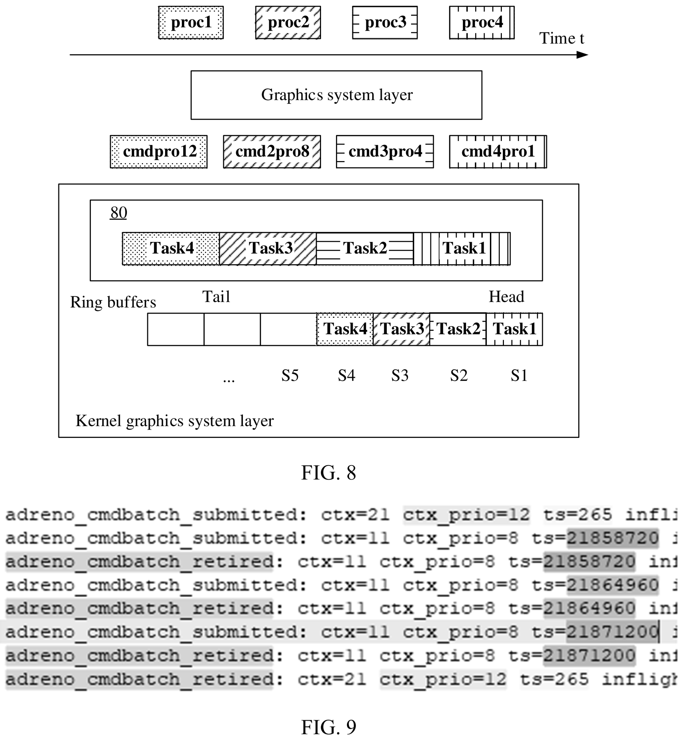

FIG. 8 is a schematic diagram 2 of a principle according to an embodiment of this application.

In the technical solution of this application, a preemption function for ring buffer resources is added. A dispatcher pending list (Dispatcher Pending List) module 80 is added to the KGSL. In this module, GPU tasks with different priorities are re-sorted, and GPU tasks with high priorities are sorted in front and GPU tasks with low priorities are sorted at the end.

After sorting, a task queue is placed into the ring buffers. In this case, the execution order of the GPU tasks is no longer first come first executed, but important tasks with high priorities are executed first. In this case, the GPU task corresponding to cmd1pro12 is task4, and task4 has the lowest priority; the GPU task corresponding to cmd2pro8 is task3, and task3 has a priority higher than that of task4; the GPU task corresponding to cmd3pro4 is task2, and task2 has a priority higher than that of task3; and the GPU task corresponding to cmd4pro1 is task1, and task1 has the highest priority and is executed first.

Through the foregoing technical solution, if the GPU task corresponding to cmd4pro1 is the GPU task related to the foreground displayed picture, even if cmd4pro1 is generated the latest, because the GPU task task1 corresponding to cmd4pro1 has the highest priority, task1 can also be executed first, thereby avoiding freezing of the foreground.

The technical effect of the solution of this application is described below with reference to actual test results.

FIG. 9 is an execution log of GPU tasks after adoption of this solution according to an embodiment of this application.

A low-priority GPU task ts=265 is submitted first. This task is a GPU task corresponding to the camera algorithm. ts=265 is a number of the task (task). A priority of ts=265 is ctx_prio=12.

During this period, three new GPU tasks with higher priorities, ts=21858720, ts=21864960, and ts=21871200 appeared. The priorities of these three GPU tasks are ctx_prio=8, which is higher than ctx_prio=12. Therefore, ts=21858720, ts=21864960, and ts=21871200 are executed in sequence before ts=265. These three GPU tasks are GPU rendering tasks corresponding to video rendering. After ts=21858720, ts=21864960, and ts=21871200 are all executed, ts=265 is completed last.

A system user interface (system user interface, system UI) of the electronic device is a core application of the system, and is responsible for feeding back statuses of the system and applications, and keeping a large amount of interaction with the user. With the system UI as the base class, subclasses of the system UI implement different system interfaces. The main view structure of the system UI includes a leftmost home screen, a lock screen wallpaper (wallpaper), a status bar (Status Bar), a lock screen interface (keyguard), and a lock screen password interface (Bouncer). The status bar is configured to display status information of the system. After the electronic device applies the ring buffer resource preemption solution, tests show that a GPU rendering task issued by the system UI through the RenderThead has a relatively short running duration and can be completed within 16.7ms of one frame, so that no visual freezing will be caused.

Based on the above, by using the solution provided in this embodiment of this application, resources of the ring buffers are no longer allocated to GPU tasks directly in the order in which the GPU tasks are generated. Instead, the GPU tasks are first sorted according to the priorities of the GPU task types corresponding to the GPU tasks, and the GPU tasks preempts the resources of the ring buffers in the order after sorting. Further, GPU tasks with higher priorities can start to be executed earlier, while GPU tasks with lower priorities will be executed later. In this case, even if the GPU tasks with lower priorities require a relatively long time for execution, they will not block the GPU tasks with higher priorities. The task related to a displayed picture of a foreground interface of the electronic device is a GPU composition task with a higher priority, which can be executed first. Therefore, this solution can reduce freezing of the currently displayed picture of the electronic device in a scenario with heavy GPU load, thereby improving the user experience.

In the foregoing description, merely occupying resources of one ring buffer is used as an example for description. In actual applications, GPU tasks may often occupy a plurality of ring buffers. In this case, preemption weights may be determined according to a sorting result. A description is provided below with reference to specific implementations.

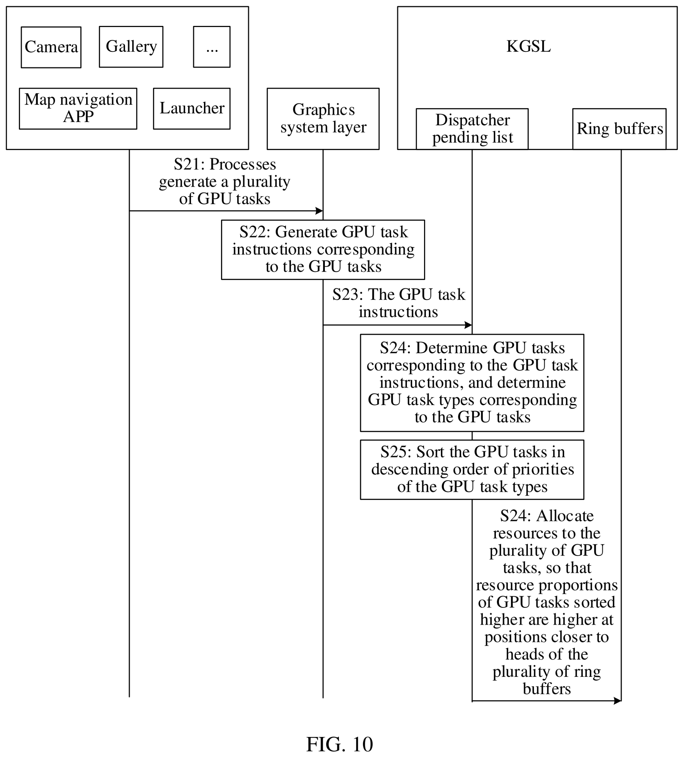

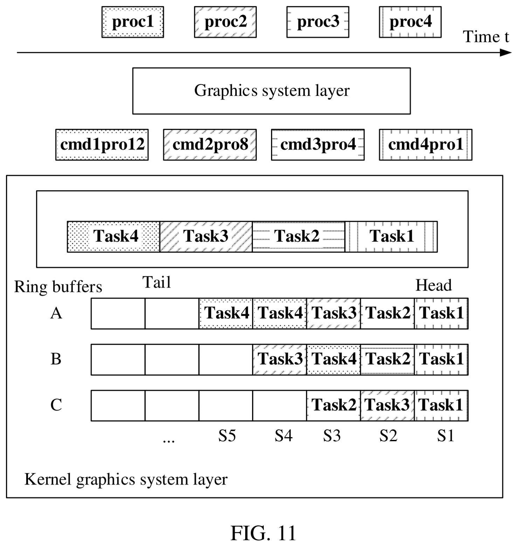

Refer to FIG. 10 and FIG. 11 together. FIG. 10 is a flowchart of another method for determining an execution order of GPU tasks according to an embodiment of this application. FIG. 11 is a schematic diagram 3 of a principle according to an embodiment of this application.

The method includes the following steps.

S21: Processes generate a plurality of GPU tasks.

A plurality of GPU tasks may be generated in processes running on an electronic device. The GPU task types in the embodiments of this application may include, but not limited to, a GPU composition task, a GPU rendering task, or a GPU algorithm task.

In the composition and sending for display process of the android layer buffer, HWC (hwcomposer) is a HAL layer module configured for composition and display. When the processing capability of the HWC is insufficient, GPU composition is usually required. The SurfaceFlinger may set a drawing instruction to the GPU through a RenderEngine thread, that is, issue a GPU composition task to the GPU. In heavy load scenarios, GPU composition tasks may include, but not limited to, scenarios that can be displayed on the foreground interface such as application starting and exiting scenarios, real-time window blur scenarios, and multi-layer display scenarios, that is, scenarios that can be directly perceived by a user through vision. Therefore, the GPU composition task has the highest priority, and it is necessary to ensure that the GPU composition task is completed first.

GPU rendering tasks are mainly generated when the electronic device performs image and video rendering processing. For example, when a user runs a video editing application on an electronic device and performs rendering processing on an edited video, a process of the application will generate a corresponding GPU rendering task.

GPU algorithm tasks are generated when applications of the electronic device use GPU resources to implement algorithm processing. For example, a navigation process of a map application of the electronic device uses GPU resources to implement a navigation algorithm, a camera shooting process of a camera application of the electronic device uses GPU resources to implement a camera algorithm, and an image recognition process of image recognition software of the electronic device uses GPU resources to implement an image recognition algorithm.

At a same moment, processes of various applications of the electronic device may generate a plurality of GPU tasks.

A description is provided by using an example in which processes proc1, proc2, proc3, and proc4 generate four GPU tasks in sequence in FIG. 11.

S22: A Graphics System Layer generates GPU task instructions corresponding to the GPU tasks.

After acquiring the GPU tasks issued by the processes, the Graphics System Layer generates GPU task instructions corresponding to the GPU tasks.

Each GPU task instruction corresponds to one GPU task.

As shown in FIG. 11, the GPU task instruction corresponding to proc1 is cmdlpro12, which is a GPU algorithm task with a priority of 12; the GPU task instruction corresponding to proc2 is cmd2pro8, which is a GPU rendering task with a priority of 8; the GPU task instruction corresponding to proc3 is cmd3pro4, which is a GPU algorithm task with a priority of 4; and the GPU task instruction corresponding to proc4 is cmd4pro1, which is a GPU composition task with a priority of 1.

S23: The Graphics System Layer sends the GPU task instructions to a Dispatcher Pending List of the KGSL.

S24: The Dispatcher Pending List determines GPU tasks corresponding to the GPU task instructions, and determines GPU task types corresponding to the GPU tasks.

S25: The Dispatcher Pending List sorts the GPU tasks in descending order of priorities of the GPU task types.

During sorting according to task types, a priority order of the GPU task types is that: a priority of the GPU composition task is higher than that of the GPU rendering task, and the priority of the GPU rendering task is higher than that of the GPU algorithm task. For example, in this case, the priority of the GPU composition task may be represented by pro1, the priority of the GPU rendering task may be represented by pro8, and the priority of the GPU algorithm task may be represented by pro12. In this case, during sorting, because priorities of GPU tasks of the same type are the same, the GPU tasks generated first may be arranged in front and then executed first, and the GPU tasks generated later may be arranged in the rear and then executed later.

In another possible implementation, actually, the sorting may alternatively be performed according to priorities of services corresponding to the GPU tasks. When processes that trigger the GPU tasks implement different services, the services corresponding to the GPU tasks are different and the corresponding priorities are also different. The priority of the GPU task triggered by each process is predetermined, and a priority identifier is pre-allocated to the priority of the GPU task triggered by each process as a determining basis of the priority. For example, pro1, pro4, pro8, and pro12 in FIG. 11 are all priority identifiers, and in this case, classification is not directly performed according to types of the GPU tasks, but for specific services. Therefore, GPU tasks of the same type may have different priorities due to different specific services. For example, proc12 is a GPU algorithm task with a priority of 12, and proc4 is a GPU algorithm task with a priority of 4, but the two algorithm tasks correspond to different services.

In the solution of this application, a dispatcher pending list (Dispatcher Pending List) module is added to the KGSL. In this module, GPU tasks with different priorities are re-sorted, and GPU tasks with high priorities are sorted in front and GPU tasks with low priorities are sorted at the end.

The difference in the sorting manners is only reflected in the order of GPU tasks in the Dispatcher Pending List. The sorting manners will not affect the resource preemption policy in the ring buffers.

It may be understood that, for both of the two sorting manners: sorting according to priorities of GPU task types or sorting according to services corresponding to GPU tasks, a case that priorities are the same may occur. When there are two or more GPU tasks corresponding to the same priority, the Dispatcher Pending List acquires task generation times respectively corresponding to the GPU tasks with the same priority, and sorts the two or more GPU tasks with the same priority in chronological order of the task generation times.

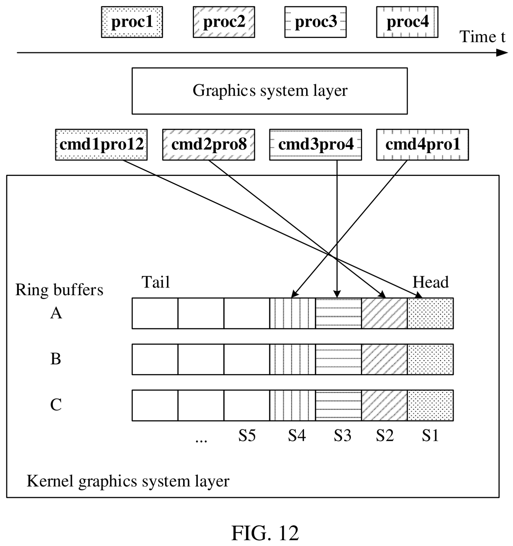

Refer to a schematic diagram 4 of a principle shown in FIG. 12.

In the solution without preemption of ring buffers shown in FIG. 12, GPU tasks occupy the ring buffers in a first-come-first-served order and wait for execution. Specifically, the GPU tasks issued by proc1, proc2, proc3, and proc4 sequentially pass through the Graphics System Layer and then generate cmd1pro12 (a GPU algorithm task with a priority of 12), cmd2pro8 (a GPU algorithm task with a priority of a8), cmd3pro14 (a GPU rendering task with a priority of 4) and cmd4pro1 (a GPU composition task with a priority of 1). These tasks run in the ring buffers of the KGSL according to the logic of first-come-first-executed and occupying all resources. For three ring buffers A, B, and C, provided that a GPU task is generated first, it will first occupy resources close to the head (head); and provided that a GPU task is generated later, it can only passively occupy resources near the tail (tail). In this case, if an execution time of the GPU task generated by proc1 is long, the GPU composition task generated by the key process proc4 will be affected, causing freezing.

Still referring to FIG. 11, in the solution of this application, the Dispatcher Pending List module re-sorts GPU tasks with different priorities. In this case, cmd4pro1 (a GPU composition task with a priority of 1) has the highest priority and is sorted as task1; cmd3pro4 (a GPU composition task with a priority of 4) has the second highest priority and is sorted as task2; cmd2pro8 (a GPU composition task with a priority of 8) has the third highest priority and is sorted as task3; and cmd1pro12 (a GPU composition task with a priority of 12) has the fourth highest priority and is sorted as task4.

S26: Allocate resources to the GPU tasks, so that resource proportions of GPU tasks sorted higher are higher at positions closer to heads of the plurality of ring buffers.

When preempting the resources of the ring buffers, the high-priority task4 is sorted in front and preempts three ring buffers at a position S1 first.

The second-highest-priority task2 preempts two ring buffers at a position S2 and one ring buffer at a position S3.

The third-highest-priority task3 preempts one ring buffer at the position S2, the position S3, and the position S4 respectively.

After the preemption, the lowest-priority task4 (for example, corresponding to a camera algorithm) only occupies the positions S3, S4, and S5, and occupies one ring buffer at each of the positions.

An implementation of the resource preemption is specifically described below.

For a first GPU task and a second GPU task, the first GPU task is sorted higher than the second GPU task.

A quantity of ring buffers occupied by the first GPU task at a first position is made greater than or equal to a quantity of ring buffers occupied by the second GPU task at the first position.

In addition, a position occupied by the first GPU task farthest from the heads of the ring buffers is a second position, a position occupied by the second GPU task farthest from the heads of the ring buffers is a third position, and the second position is closer to the heads of the ring buffers than the third position.

For example, when the first GPU task is task1 and the second GPU task is task2, the first position is S1. In this case, task1 occupies three ring buffers at the first position S1, and task2 occupies zero ring buffers at the first position S 1. In addition, a position occupied by task1 farthest from the heads of the ring buffers is a second position, and the second position is also S1; and a position occupied by task2 farthest from the heads of the ring buffers is a third position, and the third position is S3. S1 is closer to the heads of the ring buffers than S3. In addition, in this case, the first GPU task task1 occupies all ring buffers at the first position, so that the first GPU task task1 with the highest priority can start to be executed and completed as soon as possible.

In another example, when the first GPU task is task2 and the second GPU task is task3, the first position is S2. In this case, task2 occupies two ring buffers at the first position S2, and task3 occupies one ring buffer at the first position S2. In addition, a position occupied by task2 farthest from the heads of the ring buffers is a second position, and the second position is S3; and a position occupied by task3 farthest from the heads of the ring buffers is a third position, and the third position is S4. S3 is closer to the heads of the ring buffers than S4.

In another example, when the first GPU task is task3 and the second GPU task is task4, the first position is S2. In this case, task3 occupies one ring buffer at the first position S2, and task4 occupies zero ring buffers at the first position S2. In addition, a position occupied by task3 farthest from the heads of the ring buffers is a second position, and the second position is S4; and a position occupied by task4 farthest from the heads of the ring buffers is a third position, and the third position is S5. S4 is closer to the heads of the ring buffers than S5.

In addition, for a third GPU task and a fourth GPU task further included in the GPU tasks, when the third GPU task is sorted higher than the fourth GPU task, and the fourth GPU task exactly completes occupation of all required ring buffers after remaining ring buffers at the fourth position are occupied by the fourth GPU task, the remaining ring buffers at the fourth position are set to a dormant state; and the fourth GPU task occupies ring buffers at a fifth position, where the fourth position is closer to the heads of the ring buffers than the fifth position.

For example, when the third GPU task is task3, and the fourth GPU task is task4, the fourth position is S4, and the fifth position is S5. After task3 completes occupation of all required ring buffers, the position S4 of a ring buffer C is the remaining ring buffer at the fourth position. The fourth GPU task exactly completes occupation of all required ring buffers after the position S4 of the ring buffer C is occupied by the fourth GPU task. In this case, the position S4 of the ring buffer C will not be by the fourth GPU task, but will be set to a dormant state. In this case, the fourth GPU task task4 occupies a ring buffer at the fifth position S5that is, occupies the position S5 of a ring buffer A, so that the fourth GPU task completes occupation of all required ring buffers. By setting the position S4 of the ring buffer C to the dormant state, power consumption can be saved.

Based on the above, by using the solution provided in this embodiment of this application, the GPU tasks are first sorted according to the priorities of the GPU task types corresponding to the GPU tasks, and then the GPU tasks preempts the resources of the ring buffers in the order after sorting. Therefore, GPU tasks with higher priorities can start to be executed earlier and the execution can be completed earlier, while GPU tasks with lower priorities will be executed later. In this case, even if the GPU tasks with lower priorities require a relatively long time for execution, they will not block the GPU tasks with higher priorities. The task related to a displayed picture of a foreground interface of the electronic device is a GPU composition task with a higher priority, which can be executed first. Therefore, this solution can reduce freezing of the currently displayed picture of the electronic device in a scenario with heavy GPU load, thereby improving the user experience. In addition, this solution adjusts the execution order of GPU tasks by resource preemption, and requires no GPU frequency increase, so that no GPU power consumption increase is caused, and the solution is highly practical.

Based on the task scheduling method provided in the foregoing embodiments, an embodiment of this application further provides an electronic device. A detailed description is provided below with reference to the accompanying drawings.

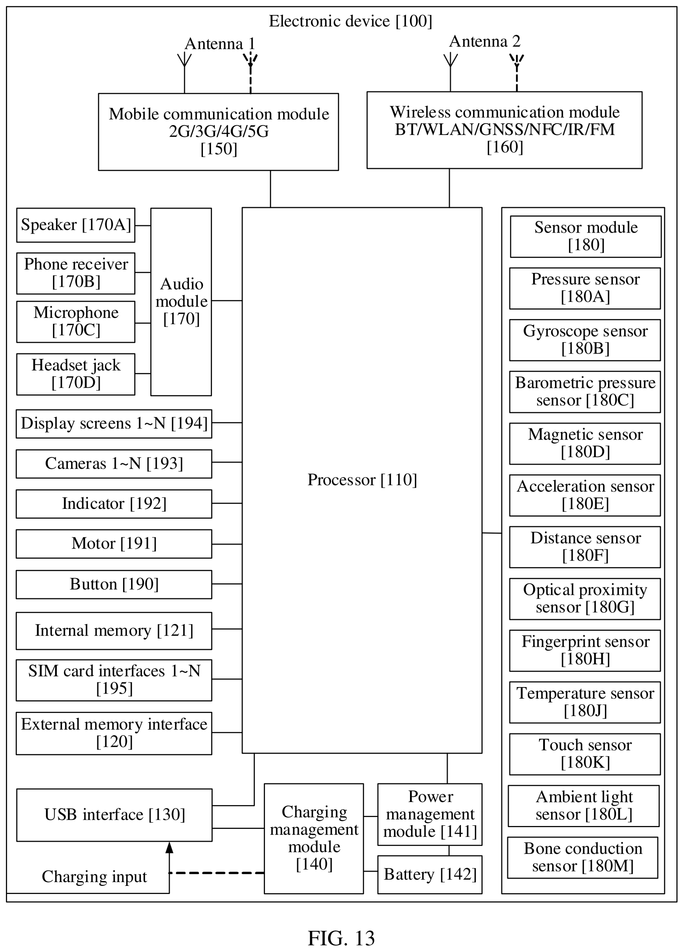

FIG. 13 is a schematic diagram of an electronic device according to an embodiment of this application.

The electronic device shown in the figure may be a mobile phone, a notebook computer, a wearable electronic device (such as a smart watch), a tablet computer, an augmented reality (augmented reality, AR) device, a virtual reality (virtual reality, VR) device, an in-vehicle device, or the like.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a phone receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors. The controller may generate an operation control signal according to instruction operation code and a time-sequence signal, and control obtaining and executing of instructions.

The processor 110 may be further provided with a memory, configured to store instructions and data. In some embodiments, the memory in the processor 110 is a cache memory. The memory may store instructions or data that have just been used or recycled by the processor 110. If the processor 110 needs to use the instructions or the data again, the processor 110 may directly invoke the instructions or the data from the memory, to avoid repeated access and reduce a waiting time of the processor 110, thereby improving system efficiency.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs that execute a program instruction to generate or change display information.

The internal memory 121 may be configured to store computer-executable program code. The executable program code includes an instruction. The internal memory 121 may include a program storage area and a data storage area. The program storage region may store an operating system, an application program required by at least one function, and the like. The data storage region may store data and the like created when the electronic device 100 is used. In addition, the internal memory 121 may include a high-speed random access memory, and may further include a non-volatile memory, for example, at least one disk storage device, a flash memory device, or a universal flash storage (universal flash storage, UFS). The processor 110 performs various function applications and data processing of the electronic device 100 by running the instructions stored in the internal memory 121 and/or the instructions stored in the memory arranged in the processor.

In this embodiment of this application, when the computer executable program code stored in the internal memory 121 is invoked and executed by the processor, the method for determining an execution order of GPU tasks described in the foregoing description is implemented. By implementing this method, in a scenario with heavy GPU load, freezing of a currently displayed picture of an electronic device can be reduced, thereby improving the user experience. In addition, this solution adjusts the execution order of GPU tasks by resource preemption, and requires no GPU frequency increase, so that no GPU power consumption increase is caused, and the solution is highly practical.

Specifically, when the user opens a video editing application for video rendering and returns to a desktop to trigger an animation effect, the user perceives no freezing of the foreground picture; or when the user opens a map navigation APP for navigation and positioning, and returns to the desktop to trigger an animation effect, the user perceives no freezing of the foreground picture; or when the user takes a photo or shoots a video through a camera application and then returns to the desktop to trigger an animation effect, the user perceives no freezing of the foreground picture. This is because after adopting the technical solution of this application, a GPU task corresponding to the foreground animation effect has a high priority and can therefore be executed first, and the GPU task corresponding to the foreground animation effect can be processed within one frame, and further, the user perceives no freezing or frame dropping through vision.

In addition, this application further provides a computer-readable storage medium, where the computer-readable storage medium stores a computer program, and when the computer program is executed by an electronic device, the task scheduling method provided in the foregoing description is implemented.

In addition, an embodiment of this application further provides a chip. The chip includes a processor, and the processor is configured to invoke a computer program in a memory to perform the task scheduling method provided in any one of the foregoing implementations.

In this application, "at least one" refers to one or more, and "a plurality of" refers to two or more. The term "and/or" is used to describe an association relationship between associated objects and indicates that three relationships may exist. For example, "A and/or B" may indicate the following three cases: only A exists, only B exists, and both A and B exist. A and B may be singular or plural.

The foregoing embodiments are merely provided for describing the technical solutions of this application, but not intended to limit this application. A person of ordinary skill in the art shall understand that although this application has been described in detail with reference to the foregoing embodiments, modifications can be made to the technical solutions described in the foregoing embodiments, or equivalent replacements can be made to some technical features in the technical solutions, provided that such modifications or replacements do not cause the essence of corresponding technical solutions to depart from the spirit and scope of the technical solutions of the embodiments of this application.

## Claims

1. A task scheduling method, applied to an electronic device, wherein the method comprises:
acquiring a plurality of graphics processing unit (GPU) tasks, and sorting the plurality of GPU tasks in descending order of priorities of GPU task types;
allocating resources to the plurality of GPU tasks in a plurality of ring buffers, so that resource proportions of GPU tasks sorted higher are higher at positions closer to heads of the plurality of ring buffers; and
sequentially executing the plurality of GPU tasks.

2. The method according to claim 1, wherein the acquiring a plurality of GPU tasks, and sorting the plurality of GPU tasks in descending order of priorities of GPU task types specifically comprises:
acquiring GPU task instructions generated by processes, wherein each of the GPU task instructions corresponds to one GPU task;
determining GPU tasks corresponding to the GPU task instructions, and determining GPU task types corresponding to the GPU tasks; and
sorting the GPU tasks in descending order of priorities of the GPU task types.

3. The method according to claim 2, wherein when the priorities of the GPU task types corresponding to at least two GPU tasks are the same, the sorting the GPU tasks in descending order of priorities of the GPU task types specifically comprises:
acquiring task generation times corresponding to the at least two GPU tasks; and
sorting the at least two GPU tasks in chronological order of the task generation times.

4. The method according to claim 3, wherein the GPU tasks comprise at least the following two GPU tasks: a first GPU task and a second GPU task, wherein the first GPU task is sorted higher than the second GPU task, and the allocating resources to the plurality of GPU tasks in a plurality of ring buffers specifically comprises:
making a quantity of ring buffers occupied by the first GPU task at a first position greater than or equal to a quantity of ring buffers occupied by the second GPU task at the first position; and
a position occupied by the first GPU task farthest from the heads of the ring buffers is a second position, a position occupied by the second GPU task farthest from the heads of the ring buffers is a third position, and the second position is closer to the heads of the ring buffers than the third position.

5. The method according to claim 4, wherein the making a quantity of ring buffers occupied by the first GPU task at a first position greater than or equal to a quantity of ring buffers occupied by the second GPU task at the first position specifically comprises:
making the first GPU task occupy all ring buffers at the first position.

6. The method according to claim 4 or 5, wherein the GPU tasks further comprise a third GPU task and a fourth GPU task, the third GPU task is sorted higher than the fourth GPU task, the fourth GPU task is a GPU task sorted lowest in the GPU tasks, and the allocating resources to the plurality of GPU tasks in a plurality of ring buffers specifically comprises:
when the fourth GPU task exactly completes occupation of all required ring buffers after remaining ring buffers at the fourth position are occupied by the fourth GPU task, setting the remaining ring buffers at the fourth position to a dormant state; and
making the fourth GPU task occupy ring buffers at a fifth position, wherein the fourth position is closer to the heads of the ring buffers than the fifth position.

7. The method according to claim 1, wherein the GPU task type is any one of the following: a GPU composition task, a GPU rendering task, or a GPU algorithm task; and
a priority order of the GPU task types is:
a priority of the GPU composition task is higher than that of the GPU rendering task, and the priority of the GPU rendering task is higher than that of the GPU algorithm task.

8. The method according to claim 7, wherein the GPU algorithm task is generated by the following processes of applications:
a camera shooting process, a navigation process of a map application, or an image recognition process of image recognition software.

9. An electronic device, comprising a memory and a processor, wherein the memory stores a computer program, and the processor is configured to invoke and execute the computer program, to implement the task scheduling method according to any one of claims 1 to 8.

10. A computer-readable storage medium, wherein the computer-readable storage medium stores a computer program, and when the computer program is executed by an electronic device, the task scheduling method according to any one of claims 1 to 8 is implemented.

11. A chip, wherein the chip comprises a processor, and the processor is configured to invoke a computer program in a memory to perform the task scheduling method according to any one of claims 1 to 8.
